# EUROPÄISCHE PATENTANMELDUNG

(11) **EP 0 939 238 A2**
(43) Veröffentlichungstag der Anmeldung: **01.09.1999**
(21) Anmeldenummer: 99101028.1
(22) Anmeldetag: 21.01.1999
(51) Int. Cl.: F16D 3/74

(54) **Elastische Wellenkupplung**

(30) Priorität: 26.02.1998 DE 19808035
(71) Anmelder: Stromag Aktiengesellschaft, 59425 Unna (DE)
(72) Erfinder: Mehlan, Andreas, 59425 Unna (DE); Dorok, Günter, 59174 Kamen (DE)
(74) Vertreter: Wilhelm & Dauster Patentanwälte European Patent Attorneys

(57) **Zusammenfassung**

Aus dem Stand der Technik ist eine elastische Wellenkupplung bekannt, bei der eine hochelastische Zwischenstruktur axial zwischen zwei Kupplungsflanschen anvulkanisiert ist.

Erfindungsgemäß sind die Kupplungsteile einschließlich der hochelastischen Zwischenstruktur in mehrere, in Umfangsrichtung aneinanderschließende Kupplungssegmente unterteilt, die jeweils ein starres, radial ausgerichtetes, segmentförmiges Plattenelement und wenigstens zwei auf gegenüberliegenden Stirnflächen des Plattenelementes axial anschließende und unlösbar mit den Stirnflächen verbundene Elastomerelemente aufweisen, wobei die segmentförmigen Plattenelemente in Umfangsrichtung zu einem gemeinsamen Ring starr miteinander verbunden sind.

Einsatz als Torsionsschwingungsdämpfer und Verlagerungskupplung in Antriebssträngen.

## Beschreibung

Die Erfindung betrifft eine elastische Wellenkupplung mit einem antriebsseitigen Kupplungsteil sowie einem abtriebsseitigen, - auf eine Drehachse bezogen - axial zu dem antriebsseitigen Kupplungsteil beabstandeten Kupplungsteil, sowie mit einer wenigstens ein Elastomerelement aufweisenden hochelastischen Zwischenstruktur, die sich axial zwischen den beiden Kupplungsteilen erstreckt und unlösbar, insbesondere durch Anvulkanisieren, mit diesen verbunden ist.

Eine solche elastische Wellenkupplung ist allgemein bekannt. Die bekannte elastische Kupplung weist zwei aus Metall hergestellte - auf eine Kupplungsdrehachse bezogen - axial zueinander versetzte Kupplungsteile auf, zwischen denen axial eine hochelastische Zwischenstruktur in Form eines geschlossenen Gummiringkörpers oder in Form von über den Kupplungsumfang segmentierten Gummivolumina angeordnet ist. Stirnseitig ist die hochelastische Zwischenstruktur jeweils durch Anvulkanisieren unlösbar mit den einander zugewandten Stirnflächen der an- und abtriebsseitigen Kupplungsteile verbunden. Durch innere Reibungsarbeit innerhalb der hochelastischen Zwischenstruktur tritt im Betrieb der Kupplung eine relativ hohe Erwärmung auf. Insbesondere bei hohen Kupplungsdrehzahlen wirken auf die hochelastische Zwischenstruktur zudem große Fliehkräfte.

Aufgabe der Erfindung ist es, eine elastische Wellenkupplung der eingangs genannten Art zu schaffen, die gegenüber dem Stand der Technik eine erhöhte Belastbarkeit ermöglicht und mit geringem Aufwand herstellbar, montierbar und demontierbar ist.

Diese Aufgabe wird dadurch gelöst, daß die Kupplungsteile einschließlich der hochelastischen Zwischenstruktur in mehrere, in Umfangsrichtung aneinanderschließende Kupplungssegmente unterteilt sind, die jeweils ein starres, radial ausgerichtetes und segmentförmiges Plattenelement und wenigstens zwei auf gegenüberliegenden Stirnflächen des Plattenelementes axial anschließende und unlösbar mit den Stirnflächen verbundene Elastomerelemente aufweisen, wobei die segmentförmigen Plattenelemente in Umfangsrichtung zu einem gemeinsamen Ring starr miteinander verbunden sind. Der erfindungsgemäße Gegenstand stellt einen Zusatz zu der deutschen Patentanmeldung 197 12 067.9 dar, die nicht vorveröffentlicht ist. Wie auch bei der Patentanmeldung 197 12 067.9 dienen die starren und damit formstabilen Plattenelemente der erfindungsgemäßen Lösung dazu, das durch die Elastomerelemente gebildete Elastomervolumen der hochelastischen Zwischenstruktur axial zu unterteilen und dadurch die freie Dehnlänge des Elastomervolumens zu verkürzen. Damit läßt sich eine erheblich reduzierte Fliehkraftbelastung erzielen. Wie auch die 197 12 067.9 ist die erfindungsgemäße Lösung somit insbesondere für Wellenkupplungen geeignet, bei denen die Kupplungsteile einen relativ großen axialen Abstand zueinander aufweisen. Außerdem ist die erfindungsgemäße Lösung insbesondere für Wellenkupplungen geeignet, die bei hohen Drehzahlen betrieben werden. Durch die Unterteilung der Wellenkupplung in mehrere Kupplungssegmente, die in Umfangsrichtung zu der gesamten Kupplungseinheit zusammengefügt werden, wird eine vereinfachte Herstellung, Montage und Demontage erzielt. Denn die Herstellung der einzelnen Kupplungssegmente ist gegenüber geschlossenen Ringflanschen für die Kupplungsteile sowie einem einzelnen, geschlossenen und ringförmigen Plattenelement, wie dies bei dem in den Zeichnungen beschriebenen Ausführungsbeispiel der 197 12 067.9 der Fall ist, wesentlich vereinfacht. Die starre Verbindung der segmentförmigen Plattenelemente zu einem gemeinsamen Ring vermeidet es, daß die Plattenelemente im Betrieb der Kupplung durch Fliehkrafteinflüsse nach außen gedrängt werden, so daß trotz der Segmentierung der Plattenelemente die grundsätzlichen Vorteile eines einteiligen Plattenelementes für die hochelastische Zwischenstruktur beibehalten werden. Die Segmentierung der Kupplungsteile einschließlich der hochelastischen Zwischenstruktur ermöglicht zudem eine verbesserte Kühlfähigkeit der durch die Elastomerelemente gebildeten Elastomervolumina.

In Ausgestaltung der Erfindung sind die Plattenelemente einander in Umfangsrichtung teilweise überdeckend angeordnet und in den Überdeckungsbereichen miteinander verbunden. Dadurch wird eine hohe Steifigkeit der Verbindungsabschnitte zwischen den einzelnen Plattenelementen erzielt, die eine sichere Funktion der Fliehkrafteliminierung durch die Plattenelemente gewährleistet.

In weiterer Ausgestaltung der Erfindung sind die Plattenelemente einander axial wechselweise überdeckend angeordnet. Dadurch wird gewährleistet, daß das letzte Plattenelement mit dem in Umfangsrichtung ersten Plattenelement in derselben Radialebene verbunden werden kann.

In weiterer Ausgestaltung der Erfindung sind die Plattenelemente in den Überdeckungsbereichen durch form- und/oder kraftschlüssig wirksame Verbindungselemente zu dem Ring zusammengefügt. Dabei sind Verbindungen mittels axial wirkender Paßschrauben oder Klammern vorgesehen. Eine Verbindung der Plattenelemente kann auch durch einen am Innendurchmesser der segmentförmigen Plattenelemente verschraubten Ring erfolgen. Sowohl Kraft- als auch Formschluß wird alternativ durch einen die Plattenelemente im Bereich ihres Außendurchmessers radial übergreifenden Ring geschaffen, der mit den Plattenelementen verschraubt ist. Formschlußverbindungen werden auch durch klauenförmige Ausnehmungen im Bereich der Plattenelemente geschaffen, die derart korrespondierend zueinander gestaltet sind, daß sie ineinander greifen.

In weiterer Ausgestaltung der Erfindung sind die Plattenelemente eben gestaltet und die einander jeweils im Bereich der Plattenelemente axial gegenüberliegenden Elastomerelemente weisen eine um die axiale Dicke des Plattenelementes unterschiedliche axiale Tiefe auf. Dadurch wird trotz des alternierenden axialen Versatzes der segmentierten Plattenelemente die Positionierung der ebenfalls segmentierten Kupplungsteile auf jeweils gleicher axialer Höhe gewährleistet. Die unterschiedlichen axialen Tiefen der Elastomerelemente gleichen somit den axialen Versatz der jeweiligen Plattenelemente aus.

In weiterer Ausgestaltung der Erfindung sind die Elastomerelemente durch radial verlaufende Belüftungsaussparungen voneinander getrennt. Dadurch wird eine gute Kühlung der Elastomervolumina erzielt.

In weiterer Ausgestaltung der Erfindung sind die Belüftungsaussparungen zwischen den jeweils axial gegenüberliegenden Elastomerelementen derart in Umfangsrichtung versetzt zueinander angeordnet, daß jeweils eine Belüftungsaussparung des einen Elastomerbereiches einem Elastomerelement des anderen Elastomerbereiches axial gegenüberliegt. Dadurch wird eine maximale Kühlung der elastischen Wellenkupplung während des Betriebs erzielt, da durch die Belüftungsaussparungen kühlende Luft immer auf Höhe eines Elastomervolumens auf der gegenüberliegenden Seite der Plattenelemente entlangströmt. Die innere Reibung jedes Elastomervolumens während des Kupplungsbetriebes führt zu Wärmezentren im Bereich der Elastomervolumina, so daß durch die beschriebene Ausgestaltung jeweils eine Belüftungsaussparung einem Wärmezentrum axial gegenübersteht.

In weiterer Ausgestaltung der Erfindung weisen beide Elastomerbereiche der hochelastischen Zwischenstruktur die gleiche, durch die Belüftungsaussparungen definierte Teilung auf. In weiterer Ausgestaltung sind die Kupplungssegmente identisch gestaltet, wobei jedes Kupplungssegment zwei in Umfangsrichtung unterschiedlich lang erstreckte Elastomerseiten aufweist, und die unterschiedlich lang erstreckten Elastomerseiten sind symmetrisch zu einer radialen Mittellängsebene ausgerichtet. Dadurch ist es möglich, jeweils identische Kupplungssegmente - jeweils um ihre Hochachse um 180° gedreht - zu dem gemeinsamen Ring in Umfangsrichtung aneinanderzureihen und so die Wellenkupplung zu erhalten. Der Einsatz identischer Kupplungssegmente ermöglicht einen wesentlich geringeren Fertigungsaufwand, da lediglich eine einzige Werkzeugform zur Herstellung der Kupplungssegmente benötigt wird.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt eine Explosionsdarstellung einer Ausführungsform einer erfindungsgemäßen Wellenkupplung, wobei die einzelnen Kupplungssegmente in Querschnitten dargestellt sind,
- Fig. 2: in vergrößerter Darstellung eines der Kupplungssegmente nach Fig. 1 längs der Schnittlinie II-II in Fig. 4,
- Fig. 3: in ebenfalls vergrößerter Darstellung das Kupplungssegment nach Fig. 2 in einer von der gegenüberliegenden Seite betrachteten Schnittdarstellung längs der Schnittlinie III-III in Fig. 4,
- Fig. 4: einen Längsschnitt durch ein Kupplungssegment nach den Fig. 1 bis 3,
- Fig. 5: einen Ausschnitt des Kupplungssegmentes nach Fig. 3 entlang der Schnittlinie V-V in Fig. 3,
- Fig. 6: eine weitere Schnittdarstellung durch das Kupplungselement nach Fig. 3 entlang der Schnittlinie VI-VI in Fig. 3, und
- Fig. 7: die vier Kupplungssegmente der Wellenkupplung nach Fig. 1 in einer in eine gemeinsame Ebene abgerollten Darstellung.

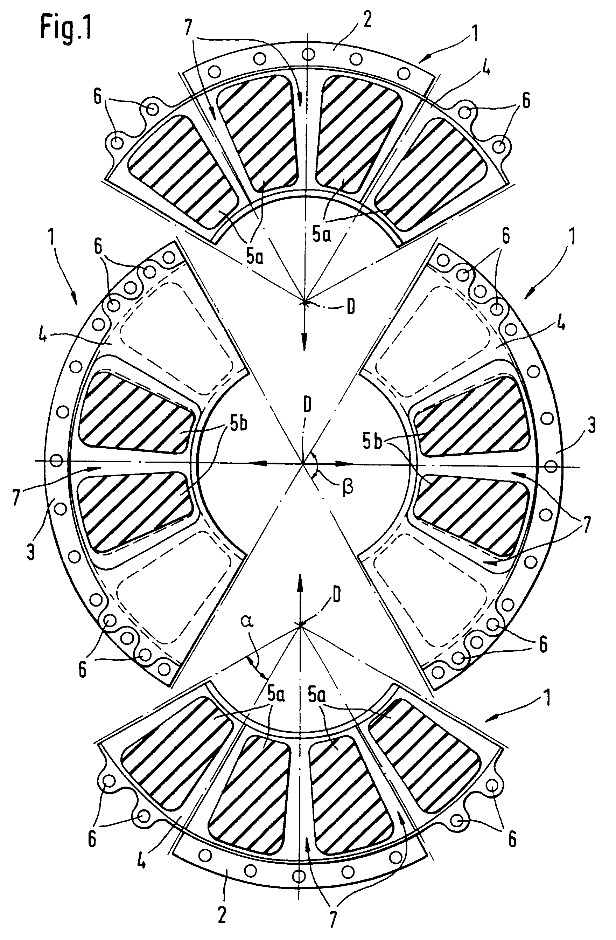

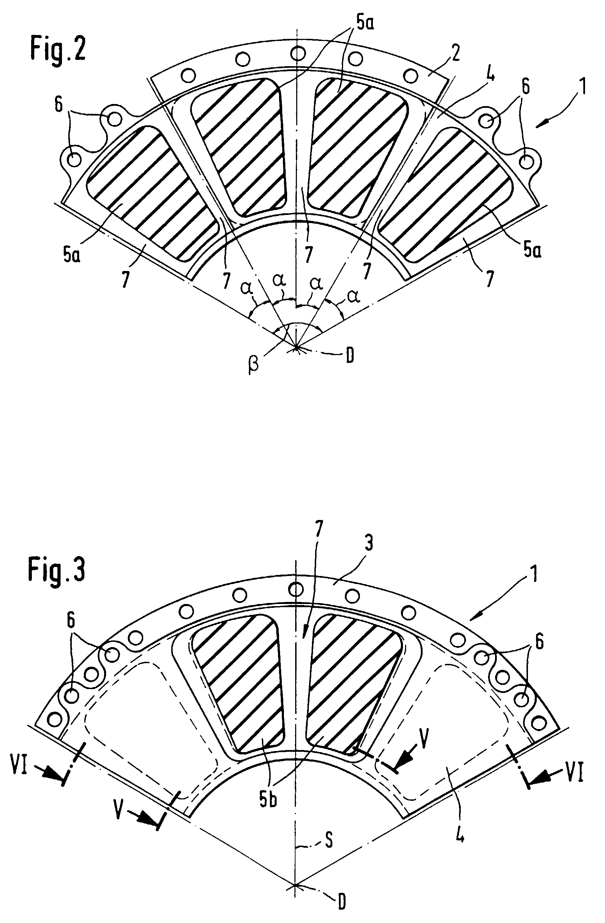

Eine elastische Wellenkupplung nach den Fig. 1 bis 7 weist eine Kupplungsachse D auf, um die die elastische Wellenkupplung drehbar ist. Die elastische Wellenkupplung ist in an sich bekannter Weise zwischen einer Antriebsseite und einer Abtriebsseite eines Antriebsstranges angeordnet. Dabei ist ein nachfolgend näher beschriebener Kupplungsteil der Antriebsseite und der - auf die Drehachse D bezogen - axial versetzte andere Kupplungsteil der Abtriebsseite zugeordnet. Die elastische Wellenkupplung kann auch umgekehrt zwischen die Antriebs- und die Abtriebsseite des Antriebsstranges eingebaut werden, so daß die beiden Kupplungsteile entsprechend entgegengesetzt der Abtriebsseite und der Antriebsseite zugeordnet sind.

Die vorliegenden Anmeldungsunterlagen stellen einen Zusatz zu der deutschen Patentanmeldung 197 12 067.9 dar. Der Inhalt dieser älteren Patentanmeldung wird hiermit ergänzend zum Gegenstand der vorliegenden Anmeldungsunterlagen gemacht.

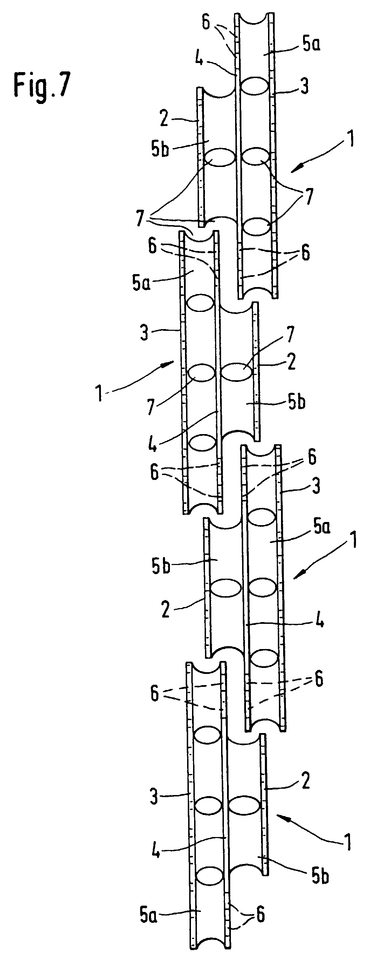

Die elastische Wellenkupplung setzt sich aus insgesamt vier Kupplungssegmenten 1 zusammen, die alle identisch gestaltet sind. Die vier Kupplungssegmente 1 werden in Umfangsrichtung zu einem gemeinsamen Kupplungsring in nachfolgend näher beschriebener Weise zusammengefügt, wobei jeweils benachbarte Kupplungssegmente 1 um eine - auf die Drehachse D bezogen - radiale Mittelhochachse um 180° verdreht angeordnet sind. In zusammengefügtem Zustand der Kupplungssegmente 1 ergibt sich sowohl für die Antriebsseite als auch für die Abtriebsseite jeweils ein tellerringförmiger Kupplungsflansch 2, 3, die die Kupplungsteile bilden und axial zueinander beabstandet sind. Beide Kupplungsflansche 2, 3 setzen sich aus in Umfangsrichtung aneinanderschließenden Flanschsegmenten 2, 3 zusammen, wobei die radialen Seitenkanten dieser Flanschsegmente 2, 3 in Umfangsrichtung bündig aneinander anschließen. Zwischen den axial beabstandeten Kupplungsflanschen 2, 3 erstreckt sich eine hochelastische Zwischenstruktur 4, 5a, 5b, die sich aus verschiedenen, als Elastomerelemente dienenden Elastomervolumina 5a, 5b und aus einer der Anzahl der Kupplungssegmente 1 entsprechenden Anzahl von als Plattenelemente dienenden Plattensegmenten 4 zusammensetzt. Die Plattensegmente 4 sind koaxial zu den Flanschsegmenten 2, 3 auf gleicher radialer Höhe axial zwischen diesen angeordnet, wobei die Plattensegmente 4 in Umfangsrichtung derart miteinander verbunden werden, daß sie im montierten Zustand derart parallel zu einer gemeinsamen Radialebene der Drehachse D ausgerichtet sind, daß ihre jeweils einander zugewandten Stirnflächen in dieser Radialebene liegen (Fig. 7). Im montierten Zustand weist die elastische Wellenkupplung im wesentlichen den Aufbau und die Funktion der elastischen Wellenkupplung nach der DE 197 12 067.9 auf. Neben den Kupplungsflanschen 2, 3 ist auch die durch die Plattensegmente 4 gebildete Zwischenplatte als starre und formstabile Konstruktion aus Metallteilen hergestellt.

Auf beiden axial anschließenden Seiten der durch die Plattensegmente 4 gebildeten Zwischenplatte sind Elastomerbereiche der hochelastischen Zwischenstruktur in Form von in gleichmäßiger Teilung segmentierten Gummivolumina 5a, 5b anvulkanisiert, die jeweils auf ihrer gegenüberliegenden Seite durch Anvulkanisieren mit dem zugehörigen Flanschsegment 2, 3 unlösbar verbunden sind. Die Elastomervolumina 5a, 5b sind im Querschnitt kreisscheibensegmentartig gestaltet und werden durch radial durchgehende Belüftungsaussparungen 7 voneinander getrennt. Die Belüftungsaussparungen 7 sind jeweils koaxial zu Radialen der Drehachse D ausgerichtet, wobei die Belüftungsaussparungen 7 in Umfangsrichtung jeweils um identische Teilungswinkel α, die beim dargestellten Ausführungsbeispiel ca. 30° betragen, innerhalb der Elastomerbereiche vorgesehen sind. Die Belüftungsaussparungen 7 sind zu beiden radialen Enden hin offen, so daß als Kühlströmung dienende Luft im Betrieb der Kupplung radial durch diese Belüftungsaussparungen 7 hindurchströmen kann. Jeder ringförmige Elastomerbereich weist demzufolge insgesamt zwölf Gummivolumina 5a, 5b und jeweils zwölf Belüftungsaussparungen 7 auf, die gleichmäßig über den Umfang des jeweiligen Elastomerbereiches verteilt sind.

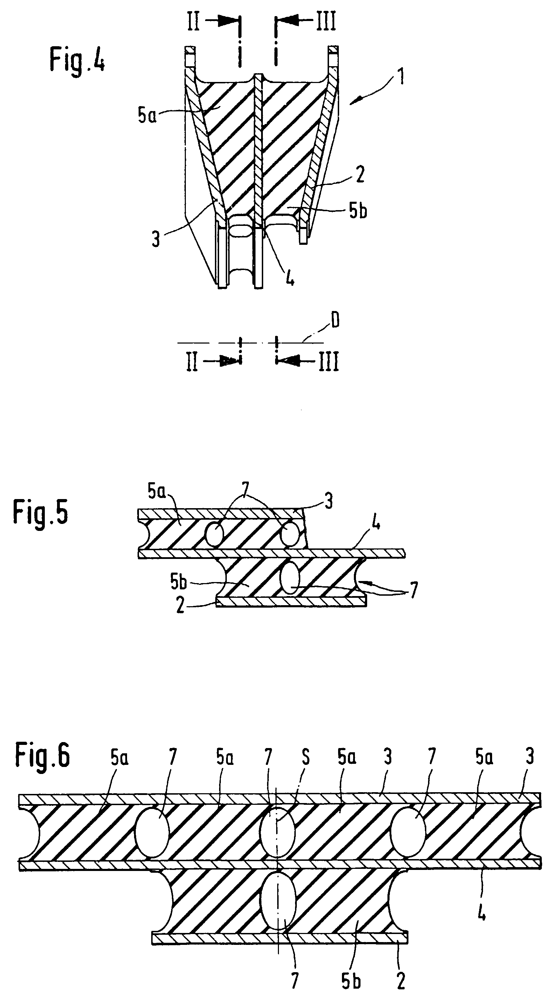

Wie aus Fig. 4 erkennbar ist, verjüngen sich die Gummivolumina 5a, 5b radial nach innen, da die jeweiligen Flanschsegmente 2, 3 aufgrund ihrer tellerringförmigen Gestaltung zur Drehachse D axial zum jeweiligen Plattensegment 4 hin erstreckt sind.

Die vier Kupplungssegmente 1 werden im Bereich der Plattensegmente 4 dadurch miteinander verbunden, daß die jeweils benachbarten Plattensegmente 4 einander in Umfangsrichtung um einen bestimmten Winkel, der beim dargestellten Ausführungsbeispiel dem Teilungswinkel α entspricht, überlagert und in diesen Überdeckungsbereichen starr miteinander verbunden sind. Jedes Plattensegment 4 weist daher in Umfangsrichtung eine Erstreckung über einen Gesamtwinkel β von ca. 120° auf. Dies entspricht der Umfangserstreckung des gesamten Kupplungssegmentes 1. Um die direkte Auflage der jeweiligen Überdeckungsbereiche der Plattensegmente 4 zu ermöglichen, ist jedes Plattensegment 4 auf einer Stirnflächenseite jeweils über einen Teilungswinkel α von ca. 30° freigehalten, d.h. nicht mit Elastomervolumina 5b versehen. Entsprechend ist der dieser Stirnflächenseite zugewandte Elastomerbereich durch lediglich zwei Elastomervolumina 5b und einen entsprechend in Umfangsrichtung verkürzten, lediglich einen zweifachen Teilungswinkel α von ca. 60° überstreichenden Flanschsegment 2 versehen. Sowohl im Uhrzeigersinn als auch im Gegenuhrzeigersinn weist diese Stirnflächenseite des Plattensegmentes 4 somit freie Flächenabschnitte auf, die als Überdeckungsbereiche für das Plattensegment 4 des anschließenden Kupplungssegmentes 1 dienen. In diesen Überdeckungsbereichen sind an dem Außendurchmesser des jeweiligen Plattensegmentes 4 jeweils zwei in Umfangsrichtung zueinander beabstandete und in der Ebene des Plattensegmentes 4 nach außen abragende Befestigungsaugen 6 angeformt, die mit axialen Bohrungen zur Aufnahme von Paßschrauben versehen sind.

Das auf der anderen Seite axial gegenüberliegende Flanschsegment 3 weist in Umfangsrichtung die gleiche Erstreckung wie das Plattensegment 4 auf, so daß der zwischen diesem Flanschsegment 3 und der zugewandten Stirnflächenseite des Plattensegmentes 4 erstreckte Elastomerbereich insgesamt vier Gummivolumina 5a aufweist, die durch entsprechende Belüftungsaussparungen 7 voneinander getrennt sind. Die Elastomerbereiche auf beiden Seiten der Plattensegmente 4 sind an ihren jeweils in Umfangsrichtung gesehenen Außenrändern mit derart konkav gewölbten Außenkonturen versehen, daß der jeweils anschließende Elastomerbereich des benachbarten Kupplungssegmentes 1 durch die jeweils gewählte Außenkontur im montierten Zustand wieder eine Belüftungsaussparung 7 ergibt. Die jeweiligen Außenkonturen bilden somit im wesentlichen Halbschalen der im montierten Zustand entstehenden Belüftungsaussparung 7.

Beim dargestellten Ausführungsbeispiel ist jedes Kupplungssegment 1 gemäß Fig. 6 somit symmetrisch zu einer radialen, die Drehachse D aufnehmenden Mittelhochebene S ausgebildet.

Um die einzelnen Kupplungssegmente 1 gemäß Fig. 1 zusammenzufügen, werden diese durch entsprechende Positionierung in Pfeilrichtung auf Höhe des zur Drehachse D gleichen Teilkreisdurchmessers gebracht und die zuvor alternierend um jeweils 180° verdrehten Kupplungssegmente 1 derart durch axiales Aufeinanderlegen in Überdeckung gebracht, daß jeweils zugeordnete Befestigungsaugen 6 einander exakt koaxial überdecken (Fig. 7). Auf Höhe dieser Überdeckungsbereiche werden durch die aufeinanderliegenden Befestigungsaugen 6 jeweils zweier benachbarter Plattensegmente 4 Paßschrauben hindurchgeführt und mittels entsprechender Befestigungsmuttern kraftschlüssig festgelegt.

Da die einzelnen Plattensegmente 4 axial aufeinandergelegt werden, wären bei jeweils gleich dicken Elastomerbereichen auf beiden Seiten der Plattensegmente 4 auch die Flanschsegmente 2, 3 jeweils entsprechend axial versetzt. Um dies zu verhindern und in Umfangsrichtung bündig in einer gemeinsamen Ebene aneinanderschließende Flanschsegmente 2, 3 zu schaffen, sind die Elastomerbereiche auf den gegenüberliegenden Stirnflächen der Plattensegmente 4 unterschiedlich tief - in auf die Drehachse D bezogener axialer Richtung gesehen - gestaltet. Die axiale Tiefe des die Gummivolumina 5a umfassenden Elastomerbereiches ist beim dargestellten Ausführungsbeispiel um die axiale Dicke des zugehörigen Plattensegmentes 4 geringer als die axiale Tiefe des die Gummivolumina 5b umfassenden Elastomerbereiches. Voraussetzung für diese Dimensionierung ist es, daß die Flanschsegmente 2 und 3 jeweils die gleiche axiale Dicke aufweisen. Durch die beschriebene Dimensionierung können die einzelnen Kupplungssegmente 1 im Bereich der Plattensegmente 4 - jeweils um 180° verdreht zum benachbarten Kupplungssegment 1 - axial aufeinandergelegt werden, ohne daß dadurch ein axialer Versatz der Umfangsrichtung benachbarten Flanschsegmente 2, 3 entsteht. In dem im Bereich der Befestigungsaugen 6 starr miteinander verbundenen, montierten Zustand der Plattensegmente 4 bilden somit die Flanschsegmente 2, 3 auf beiden Kupplungsseiten jeweils einen in einer gemeinsamen Radialebene angeordneten, ringförmigen Kupplungsflansch.

Die Belüftungsaussparungen 7 der gegenüberliegenden Elastomerbereiche sind beim dargestellten Ausführungsbeispiel jeweils auf gleicher Höhe angeordnet. Bei nicht dargestellten Ausführungsbeispielen der Erfindung sind die Belüftungsaussparungen und die jeweils anschließenden Gummivolumina der beiden Elastomerbereiche in Umfangsrichtung derart zueinander versetzt, daß die Belüftungsaussparungen des einen Elastomerbereiches auf gleicher Höhe von Gummivolumina des axial benachbarten Elastomerbereiches positioniert sind, so daß jeweils eine Belüftungsaussparung einem Gummivolumen gegenüberliegt.

## Patentansprüche

1. Elastische Wellenkupplung mit einem antriebsseitigen Kupplungsteil sowie einem abtriebsseitigen, - auf eine Drehachse bezogen - axial zu dem antriebsseitigen Kupplungsteil beabstandeten Kupplungsteil, sowie mit einer wenigstens ein Elastomerelement aufweisenden hochelastischen Zwischenstruktur, die sich axial zwischen den beiden Kupplungsteilen erstreckt und unlösbar, insbesondere durch Anvulkanisieren, mit diesen verbunden ist,
**dadurch gekennzeichnet,**
daß die Kupplungsteile einschließlich der hochelastischen Zwischenstruktur in mehrere, in Umfangsrichtung aneinanderschließende Kupplungssegmente (1) unterteilt sind, die jeweils ein starres, radial ausgerichtetes, segmentförmiges Plattenelement (4) und wenigstens zwei auf gegenüberliegenden Stirnflächen des Plattenelementes (4) axial anschließende und unlösbar mit den Stirnflächen verbundene Elastomerelemente (5a, 5b) aufweisen, wobei die segmentförmigen Plattenelemente (4) in Umfangsrichtung zu einem gemeinsamen Ring starr miteinander verbunden sind.

2. Wellenkupplung nach Anspruch 1, dadurch gekennzeichnet, daß die Plattenelemente (4) einander in Umfangsrichtung teilweise überdeckend angeordnet und in den Überdeckungsbereichen miteinander verbunden sind.

3. Wellenkupplung nach Anspruch 2, dadurch gekennzeichnet, daß die Plattenelemente (4) einander axial wechselweise überdeckend angeordnet sind.

4. Wellenkupplung nach Anspruch 2 oder 3, dadurch gekennzeichnet, daß die Plattenelemente (4) in den Überdeckungsbereichen durch form- und/oder kraftschlüssig wirksame Verbindungselemente (6) zu dem Ring zusammengefügt sind.

5. Wellenkupplung nach Anspruch 3 oder 4, dadurch gekennzeichnet, daß die Plattenelemente (4) eben gestaltet sind, und daß die einander jeweils im Bereich der Plattenelemente (4) axial gegenüberliegenden Elastomerelemente (5a, 5b) eine um die axiale Dicke des Plattenelementes (4) unterschiedliche axiale Tiefe aufweisen.

6. Wellenkupplung nach einem der vorhergehenden Ansprüche, dadurch gekennzeichnet, daß die Elastomerelemente (5a, 5b) durch radial verlaufende Belüftungsaussparungen (7) voneinander getrennt sind.

7. Wellenkupplung nach Anspruch 6, dadurch gekennzeichnet, daß die Belüftungsaussparungen zwischen den jeweils axial gegenüberliegenden Elastomerelementen derart in Umfangsrichtung versetzt zueinander angeordnet sind, daß jeweils eine Belüftungsaussparung des einen Elastomerbereiches einem Elastomerelement des anderen Elastomerbereiches axial geenüberliegt.

8. Wellenkupplung nach einem der vorhergehenden Ansprüche, dadurch gekennzeichnet, daß beide Elastomerbereiche der hochelastischen Zwischenstruktur die gleiche, durch die Belüftungsaussparungen (7) definierte Teilung aufweisen.

9. Wellenkuppung nach einem der vorhergehenden Ansprüche, dadurch gekennzeichnet, daß die Kupplungssegmente (1) identisch gestaltet sind, wobei jedes Kupplungssegment (1) zwei in Umfangsrichtung unterschiedlich lang erstreckte Elastomerbereiche aufweist, und daß die unterschiedlich lang erstreckten Elastomerbereiche symmetrisch zu einer radialen Mittellängsebene (S) ausgerichtet sind.

10. Wellenkupplung nach einem der vorhergehenden Ansprüche, dadurch gekennzeichnet, daß vier Kupplungssegmente (1) zu einem Kreisscheibenring zusammengefügt sind, wobei die Überdeckung der benachbarten Plattensegmente (4) jeweils einen Teilungswinkel (α) von ca. 30° entspricht.
